# EUROPÄISCHE PATENTSCHRIFT

(11) **EP 0 325 990 B1**
(45) Veröffentlichungstag und Bekanntmachung des Hinweises auf die Patenterteilung: **16.02.1994**
(21) Anmeldenummer: 89100690.0
(22) Anmeldetag: 17.01.1989
(51) Int. Cl.: G11B 7/24, G11B 7/26

(54) **Mehrschichtiges Aufzeichnungsmaterial für optische Informationen**
Multilayer recording medium for optical information
Milieu d'enregistrement à plusieurs couches pour informations optiques

(30) Priorität: 25.01.1988 DE 3802031
(43) Veröffentlichungstag der Anmeldung: 02.08.1989
(73) Patentinhaber: HOECHST AKTIENGESELLSCHAFT, 65926 Frankfurt am Main (DE)
(72) Erfinder: Wiedemann, Wolfgang, Dr., D-6222 Geisenheim (DE)

(56) Entgegenhaltungen:
- EP-A- 0 198 140
- EP-A- 0 213 923
- DE-A- 3 615 832

## Beschreibung

Die Erfindung betrifft ein einmal beschreibbares mehrschichtiges Aufzeichnungsmaterial für optische Informationen, das einen Träger und eine Schicht aus einem unsubstituierten Naphthalocyanin-Farbstoff umfaßt.

Optische Aufzeichnungsmaterialien zum Speichern von Daten sind hinlänglich bekannt. In solchen Materialien werden die Informationen in sogenannten Informationsvertiefungen (pits von ca. 1 µm Durchmesser), in konzentrischen oder spiralförmigen Spuren gespeichert. Die Informationen sind mit hoher Dichte speicherbar und optisch lesbar.

Die Informationsspeicherung erfolgt normalerweise, indem spotförmig gebündelte Energie einer Laserdiode durch die transparente Trägerschicht eingestrahlt wird, von der auf der Trägerschicht befindlichen Schicht, die einen Farbstoff in einem Bindemittel enthält, absorbiert wird, wobei diese eine starke momentane Erhitzung erfährt. Durch physikalische Zustandsänderungen wie Verdampfungs-, Schmelz- sowie Fließprozesse werden die genannten "Informationsvertiefungen" im Farbstoff/Bindemittel-System erzeugt.

Der geschilderte Schreibvorgang bewirkt einen Unterschied in den optischen Eigenschaften (wie Reflexion und Transmission) zwischen den bestrahlten und den nichtbestrahlten Schichtstellen. Die Unterschiede hinsichtlich der Intensität des reflektierten Lichtes an bestrahlten und unbestrahlten Stellen werden beim Lesevorgang zum Erkennen der Informationen herangezogen.

In einer Vielzahl von Patentveröffentlichungen werden einmal beschreibbare optische Aufzeichnungsmaterialien vorgestellt, die organische Farbstoffe, insbesondere Phthalocyanin-Derivate, enthalten. Diese Phthalocyanin-Derivate weisen als sogenannte lichtabsorbierende Schichten eine hohe Stabilität auf und werden auch in Kombination mit lichtreflektierenden Schichten, z.B. mit den Metallen Au, Te und Al in den US-A-4,241,355; 4,298,975 und der DE-A-34 46 418 beschrieben.

Der Nachteil des Einsatzes solcher metallisierten lichtreflektierenden Schichten ist deren hohe Wärmeleitfähigkeit, wodurch sich oftmals die Aufzeichnungsgeschwindigkeit von Informationen auf solcherart Materialien verringert.

Phthalocyanin-Derivate in den sogenannten lichtabsorbierenden Schichten zeigen im allgemeinen niedrige Absorptionswerte im Emissionsbereich der zur Bestrahlung verwendeten Laserdioden (λ = 800-840 nm). Oft werden deshalb bestimmte Phthalocyanine thermisch oder mit Lösungsmitteldämpfen nachbehandelt, um deren Absorptionsmaximum mehr in den längerwelligen Bereich zu verschieben (US-A-4,529,688).

Im Gegensatz dazu wird beim Einsatz von Naphthalocyanin-Derivaten in der Regel eine Absorption im längerwelligen Bereich (über 800 nm) erreicht. Diese Naphthalocyanin-Derivate müssen aber zumeist substituiert sein, z.B. durch tert.Butylgruppen am Kern, oder sie müssen am Zentralatom, z.B. Silicium, längerkettige organische Substituenten aufweisen, um eine genügend hohe Löslichkeit in der Bindemittelschicht zu gewährleisten (US-A-4,492,750; EP-A-0 188 331; 0 191 215; 0 191 970; WO 8701-076-A).

Ein Nachteil der substituierten Naphthalocyanin-Derivate liegt in ihrer schwierigen Synthese und ihrer Reinigung. Da sie gelöst in Bindemitteln homogen auf den Träger aufgetragen sind (insbesondere im spin-Beschichtungsverfahren), ist das Reflexionsverhalten der Aufzeichnungsmaterialien oftmals stark reduziert. Andererseits besteht bei zu geringem Bindemittelgehalt dieser Schichten eine erhöhte Nahordnung der Naphthalocyanin-Moleküle und demzufolge eine größere Wahrscheinlichkeit zur Auskristallisation, was wiederum die optischen Eigenschaften des Aufzeichnungsmaterials negativ beeinflußt. Wegen der Schwierigkeiten, die auch die substituierten Naphthalocyanin-Derivate hinsichtlich ihrer Löslichkeit noch aufweisen, sind die Wahlmöglichkeiten geeigneter Lösemittel für die Bindemittelschichten stark eingeschränkt, wenn Trägerschichten aus Kunststoffmaterialien wie Polycarbonat und Polymethylmethacrylat etc. verwendet werden sollen.

In der DE-A-36 22 590 werden Aufzeichnungsmaterialien bestehend aus einem Träger und einer darauf vorwiegend aufgedampften Naphthalocyanin-Schicht, die ggf. durch eine Schutzschicht abgedeckt sein kann, beschrieben. Insbesondere kann zwischen Träger und Naphthalocyaninschicht oder aber auf der Naphthalocyaninschicht, gegebenenfalls unter der Schutzschicht, sofern diese vorhanden ist, eine Pigmentschicht mit lichtreflektierenden Eigenschaften angeordnet sein. Die Aufzeichnungsempfindlichkeit dieser Aufzeichnungsmaterialien ist allerdings noch verbesserungsbedürftig.

Mehrfachschichtanordnungen sind auch aus anderen Patentveröffentlichungen bekannt. In den US-A-4,032,691 und 4,636,804 werden Aufzeichnungsmaterialien beschrieben, bestehend aus einem Träger, einer größtenteils aus Metallen wie z.B. Nickel, Aluminium, Palladium oder Gold aufgebauten lichtabsorbierenden Schicht, die auch spezielle Farbstoffe enthält, sowie einer zwischen diesen beiden Schichten angeordneten porösen Bindemittelschicht. Der Nachteil dieser Variante liegt in der aufwendigen und schwierigen Herstellung der porösen Bindemittelschicht und darin, daß die in der absorbierenden Schicht eingesetzten Farbstoffsysteme wenig stabil sind und nur verhältnismäßig gering im geforderten Wellenlängenbereich von Laserdioden absorbieren.

Es bestand daher die Aufgabe, ein mehrschichtiges, einmal beschreibbares Aufzeichnungsmaterial zur Verfügung zu stellen, das
- eine hohe Aufzeichnungsempfindlichkeit,
- eine hohe Grundreflexion,
- hohe Licht- und Klimastabilität aufweist und
- ausschließlich aus toxisch unbedenklichen organischen Materialien, die einfach herzustellen sind, aufgebaut ist sowie
- eine geringe thermische Leitfähigkeit aufweist und
- in Laserdioden-Anordnungen eingesetzt werden kann, d.h. ein entsprechendes Absorptionsmaximum in deren Emissionsbereich vorweist.

Gelöst wird die Aufgabe durch Bereitstellen eines einmal beschreibbaren mehrschichtigen Aufzeichnungsmaterials für optische Informationen, das einen Träger und eine 30 bis 200 nm dicke Schicht aus einem unsubstituierten Naphthalocyanin-Farbstoff der Formel I 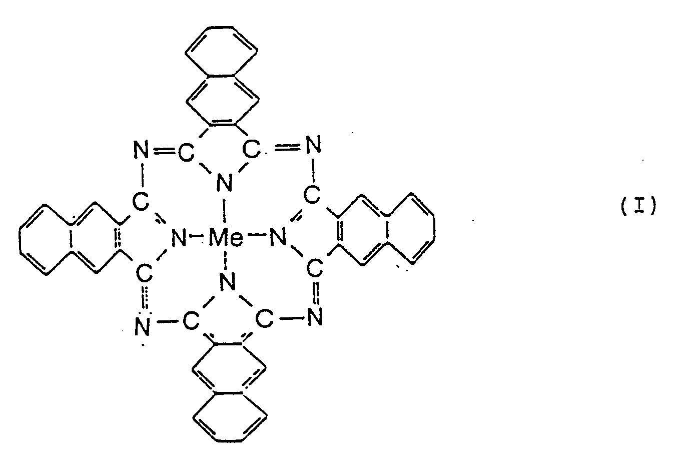
worin Me entweder zwei Wasserstoffatome oder ein Kation eines Metalls ausgewählt aus der Gruppe bestehend aus Cu, Zn, Al, Ga, In, Si, Ge, Sn, Pb, Mg, Ti, V, Cr, Mn, Fe, Co, Ni und Pd bedeutet,
umfaßt, dadurch gekennzeichnet, daß zwischen Träger und Schicht eine 30 bis 300 nm dicke, nichtporöse, durchgängige Bindemittelschicht aus einem thermoplastischen Material, das eine im Vergleich zum Farbstoff niedrige Erweichungstemperatur aufweist, angeordnet ist.

Dünne Schichten der Farbstoffe nach der allgemeinen Formel I besitzen ein hohes Absorptionsvermögen im längerwelligen bzw. nahen IR-Bereich, d.h. von 750 bis 860 nm. Bevorzugt sind allerdings Farbstoffe, die im Bereich von 800 bis 850 nm ihr Absorptionsmaximum haben. Darunter zählen vor allem Komplexverbindungen der allgemeinen Formel I, die als Me VO²⁺, AlCl²⁺, AlBr²⁺, SnCl₂²⁺, SnBr₂²⁺, wobei die Halogenatome jeweils axial zur Naphtholocyanin-Ebene stehen, oder Zn²⁺ u.a. aufweisen. Sie sind deshalb bevorzugt, weil ihr Absorptionsmaximum mit der Emission der eingesetzten Laserdioden zusammenfällt.

Vorteilhaft ist neben ihrem Absorptionsvermögen auch ihr sehr gutes Reflexionsverhalten (basic reflectivity) von größer als 20 % (durch den Träger gemessen). Es können daher sehr dünne und kompakte Schichten dieser Naphthalocyanin-Farbstoffe angewendet werden, die auch bevorzugt sind.

An unterschiedlich dicken Farbstoffschichten von Verbindungen der allgemeinen Formel I lassen sich Messungen zur Transmission, Reflexion und zur Schichtdicke (mittels eines Profilometers) durchführen. Es kann gezeigt werden, daß bei einer Schichtdicke von 90 bis 120 nm die besten Verhältnisse zur Erzielung eines Reflexionsmaximums vorliegen. Bei zunehmender Schichtdicke des Naphthalocyaninfarbstoffs nimmt zwar die Absorption weiter zu, das Reflexionsverhalten und die Aufzeichnungsempfindlichkeit, die ebenso jeweils ein Maximum durchlaufen, nehmen aber wieder ab. Eine Schichtstärke im Bereich von 30 bis 200 nm, insbesondere von 60 bis 130 nm und besonders bevorzugt von 90 bis 120 nm, wird daher angewendet. Vorteilhaft sind solch dünne Schichten auch hinsichtlich ihrer guten Hafteigenschaften sowohl auf behandelten wie auch auf unbehandelten Trägermaterialien. Eine besonders hohe Haftung wird allerdings in überraschender Weise auf der Bindemittelschicht angetroffen, so daß die Farbstoffschicht in erfindungsgemäßer Weise erst auf diese Schicht aufgetragen wird.

Als Verfahren zum Auftragen der Naphthalocyanin-Farbstoffe auf Trägermaterialien können z.B. die Kathodenzerstäubung, die Plasmapolymerisation, die Ionenplattierung, die Spin-Beschichtung, elektrostatische Spray-Verfahren sowie das Tauchverfahren angewendet werden. Besonders bevorzugt ist jedoch die Farbstoffabscheidung im Vakuum, weil dadurch optisch dichte, größtenteils olivgrün gefärbte, insbesondere gut haftende Schichten von besonders hoher Homogenität erhalten werden können. Außerdem wird durch diesen Aufdampfprozeß der Farbstoff zusätzlich gereinigt und mittels eines Schwingquarzes eine gut kontrollierbare, homogene Dickenverteilung gewährleistet.

Ein weiterer Vorteil dieser Farbstoffe ist deren thermische Stabilität, insbesondere bevorzugt ist in diesem Zusammenhang der Naphthalocyanin-Farbstoff des VO²⁺-Ions. Die thermische Stabilität ist einerseits vorteilhaft, wenn zum Auftragen der beschriebene Aufdampfprozess durchgeführt werden soll, andererseits nachteilig, wenn der Farbstoff eine zu hohe thermische Stabilität aufweist, da dann der Schreibprozeß in der Farbstoffschicht, die Aufzeichnungsgeschwindigkeit und das Kontrastverhältnis ungünstig ausfallen können.

Es war völlig überraschend, daß die erfindungsgemäße Anordnung im Gegensatz zu einer Schichtenfolge aus Träger und Naphthalocyanin-Schicht eine wesentlich höhere Aufnahmeempfindlichkeit und ein hohes Kontrastverhältnis bei Verwendung von Licht im Wellenlängenbereich von λ=800-850 nm zeigt.

Als Träger kommen transparente Materialien in Frage, um den vorwiegend von der Rückseite durchgeführten Schreib- und Lesevorgang zu ermöglichen. Als Materialien werden Glasplatten, insbesondere aber Kunststoffe wie Acrylharze, z.B. Polymethylmethacrylat, Polycarbonate, Epoxyharze, Polyvinylchlorid, Polystyrole, Polyolefine sowie Mischungen derselben verwendet.

Die Dicke der Träger liegt im Bereich um 1 mm, insbesondere bei 0,9 bis 1,4 mm, besonders bevorzugt bei 1,1 bis 1,3 mm.

Die Träger, die für Aufzeichnungsmaterialien geeignet sein sollen, müssen zudem eine hohe optische Qualität aufweisen, d.h. z.B. günstige Werte für Oberflächenglätte und Doppelbrechung. Außerdem besitzen derartige Träger insbesondere einseitig mittels Spritzgießen oder durch ein Photopolymerisationsverfahren aufgetragene Spurrillen, die sowohl konzentrisch als auch spiralförmig ausgerichtet sein können.

Erfindungsgemäß wird zwischen dem Träger und der Farbstoffschicht eine Bindemittelschicht angeordnet. Überraschenderweise zeigt sich, daß eine solche Schichtenabfolge zu sehr empfindlichen optischen Aufzeichnungsmaterialien führt. Gleichzeitig wird in derartigen mehrschichtigen Systemen eine hohe Haftfestigkeit der aufgedampften Naphthalocyaninschicht gewährleistet.

Als Bindemittel werden thermoplastische Materialien bevorzugt, die eine im Vergleich zum Farbstoff niedrige Erweichungstemperatur bei geringem Fließvermögen im Kalten zeigen. Bevorzugt sind außerdem Bindemittel, die sich bei höheren Temperaturen, insbesondere ab 200° C, zersetzen (vgl. Cellulosenitrate).

Als Bindemittel werden Cellulosederivate wie -acetate, -propionate, -acetobutyrate, insbesondere aber Cellulosenitrate, verwendet. Weiterhin werden Polyurethane, Polyester, Polycarbonate, Polyamide, Kohlenwasserstoffharze, cyclischer Kautschuk, Polyacrylate und Polymethylmethacrylate, Polystyrole sowie Polystyrol-Copolymere, Polyvinylchlorid, Polyvinylacetale, Polyvinylchlorid/Polyvinylacetat-Copolymere, Polyvinylalkohole und Phenoxyharze eingesetzt. Für wäßrige Dispersionen werden z.B. Styrol/Acrylharz-Copolymere sowie Polyvinylidenchlorid verwendet.

Besonders günstig haben sich Cellulosenitrate und Polystyrole erwiesen.

Neben der Verwendung von einzelnen Bindemitteln werden auch Bindemittelmischungen bevorzugt eingesetzt.

Werden unbehandelte Träger verwendet, d.h. solche, die keine zusätzliche Beschichtung z.B. aus Polyvinylalkohol enthalten, so müssen die Lösemittel der auf den Träger aufzutragenden Bindemittel dahingehend untersucht werden, daß sie nicht das Trägermaterial, insbesondere wenn es sich um Polycarbonat oder Polymethylmethacrylat handelt, anlösen. Die eventuell vorhandene Beschichtung aus Polyvinylalkohol wird in der Weise hergestellt, daß eine wäßrige oder alkoholische, insbesondere methanolische Lösung von Polyvinylalkohol auf den Träger aufgebracht wird und anschließend die Beschichtung getrocknet wird.

Für in diesem Sinne unbehandelte Träger werden als Bindemittel vorzugsweise solche eingesetzt, die sich in Lösemitteln wie aliphatischen oder cyclischen Kohlenwasserstoffen, Alkoholen, Glykolethern, insbesondere Propylenglykolmethylether u.a. lösen bzw. wäßrige Dispersionen bilden. Bei der Beschichtung von Trägern, wie Glasplatten oder Kunststoffsubstraten, die z.B. vorbehandelt sind oder eine photovernetzte Oberfläche besitzen, können in der Regel alle oben aufgeführten Bindemittel eingesetzt werden.

Da die auf die Bindemittelschicht aufgedampften Naphthalocyanin-Farbstoffe unsubstituiert sind, besteht nicht die Gefahr, daß sie von den Lösemitteln der Bindemittel angelöst, geschweige denn aufgelöst werden können.

Die Bindemittellösungen werden durch Rakeln, Schleudern, Tauchen oder durch elektrostatisches Sprühbeschichten auf die vorher gereinigten Träger aufgebracht. Anschließend werden die beschichteten Träger an der Luft, ggf. im Vakuum, getrocknet. Zur Beschichtung wird insbesondere der Spin-Beschichtungsprozeß bevorzugt, mit dem Bindemittelschichtdicken von unter 1 µm, besonders bevorzugt unter 250 nm, erzielt werden können.

Insbesondere liegen die Schichtdicken der Bindemittelschichten für die erfindungsgemäße Schichtanordnung im Bereich von 30 bis 300 nm, besonders bevorzugt im Bereich von 50 bis 150 nm. Es werden nichtporöse, durchgängige Bindemittelschichten konstanter Dicke erreicht.

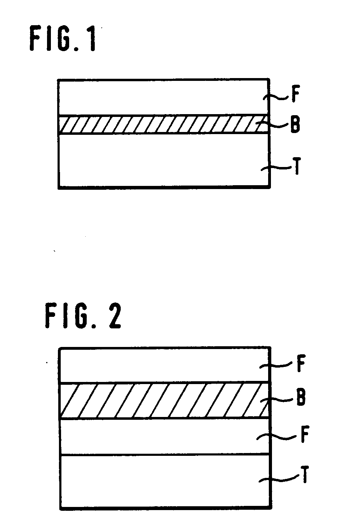

Figur 1 zeigt die erfindungsgemäße Schichtanordnung, beginnend mit dem Träger (T), die darauf aufgebrachte Bindemittelschicht (B) und der Farbstoffschicht (F), die sowohl lichtabsorbierende wie auch lichtreflektierende Eigenschaften besitzt und in der Kombination mit den anderen Schichten zu den beschriebenen vorteilhaften Eigenschaften des Aufzeichnungsmaterials führt.

Die Erfindung bezieht sich daneben auch auf ein mehrschichtiges System, das in Figur 2 dargestellt ist. Bei diesem Aufzeichnungsmaterial ist direkt auf den Träger eine Naphthalocyanin-Farbstoffschicht aufgedampft, darüber befindet sich die Bindemittelschicht und eine weitere Naphthalocyanin-Farbstoffschicht. Durch die völlige Unlöslichkeit der Farbstoffe in den Bindemitteln besteht keine Gefahr des Übertritts von Farbstoffteilchen in die Bindemittelschicht. In diesem mehrschichtigen Aufzeichnungsmaterial betragen sowohl die Dicke der Farbstoffschicht wie auch die der Bindemittelschicht jeweils bevorzugt von 40 bis 120 nm.

Die erfindungsgemäßen mehrschichtigen Aufzeichnungsmaterialien können darüber hinaus auch Verbundsysteme bilden, bei denen jeweils zwei Einheiten des mehrschichtigen Aufzeichnungsmaterials in der Weise miteinander verbunden sind, daß ein Verbundsystem entsteht, bei dem die Träger jeweils außen liegen.

Möglich sind sowohl asymmetrische wie auch symmetrische Verbundsysteme, bevorzugt sind jedoch die symmetrischen.

In den erfindungsgemäßen Verbundsystemen werden die insbesondere mehrschichtigen Aufzeichnungsmaterialien durch Klebeschichten zusammengehalten. Bevorzugt sind Schmelz- und Heißsiegelklebstoffe sowie Reaktionsklebstoffe, ggf. auch UV-vernetzende Kleber. Weiterhin können die Verbundsysteme auch durch beidseitig klebende Bänder oder Filme zusammengehalten werden.

Die Dicke der verbindenden Klebeschichten soll dabei mindestens 0,1 mm betragen und bevorzugt unter der Obergrenze von 0,6 mm liegen.

Sowohl durch Verwendung der erfindungsgemäßen mehrschichtigen Aufzeichnungsmaterialien, d.h. durch die Möglichkeit der Variation der Schichtenabfolge und der Auswahl bestimmter Schichtenzusammensetzungen, als auch durch Verwendung der erfindungsgemäßen Verbundsysteme, die eine wesentliche Erweiterung dieser Variationsmöglichkeiten zulassen, können die beiden Parametergruppen, die auf die Lochbildung, d.h. die Informationsspeicherung in Form einer pit-hole-Formation Einfluß ausüben, schichtweise aufeinander abgestimmt werden und die Schichtanordnung in der Weise ausgestaltet werden, daß sowohl Aufzeichnungsempfindlichkeit wie auch das Kontrastverhältnis optimale Werte zeigen. Die beiden Parametergruppen umfassen die optischen Eigenschaften wie Absorption, Reflexion u.a., und die thermischen Eigenschaften wie Erweichungsbereich, Fließverhalten usw.

Die folgenden Beispiele sollen die Erfindung näher erläutern, jedoch nicht auf diese beschränkend wirken.

### Beispiel 1

Ein Träger aus Polycarbonat von 1,2 mm Dicke wird im Spin-Coating-Verfahren mit einer 1,5 gew.-%igen Cellulosenitratlösung (1,5 g Cellulosenitrat in 98,5 g Propylenglykolmethylether mit ca. 35 Gew.-% n-Butanol) in der Weise beschichtet, daß eine Schichtdicke von ca. 60-70 nm resultiert. Die Bindemittelschicht wird getrocknet und darauf ein ca. 100 nm dicker Film eines Naphthalocyaninfarbstoffs mit Me = AlCl²⁺, aufgedampft. Die homogene Aufzeichnungsschicht ist olivgrün gefärbt.

Das Aufdampfen der Farbstoffschicht geschieht in der Weise, daß der sich in einem induktiv beheizten WolframSchiffchen befindliche Farbstoff im Vakuum von 1,3 x 10⁻⁷-10⁻⁸ bar auf einer sich drehenden Scheibe aus Polycarbonat niedergeschlagen wird. Die Aufdampfgeschwindigkeit beträgt ca. 0,3 nm/s.

Zum Vergleich wird ein Polycarbonat-Träger gleicher Dicke und ohne Bindemittelschicht mit dem gleichen Naphthalocyanin-Farbstoff ebenso dick beschichtet.

Beide Proben werden der Reflexions- sowie der Transmissionsmessung unterworfen. Hierbei wird durch den elektromotorisch gedrehten Träger der Strahl einer Laserdiode (λ=816 nm, Strahldurchmesser = 4,5 mm, Leistung = 3 mW) geschickt und wahlweise entweder die Reflexion oder die Transmission gemessen. Dabei wird der jeweilige Strahl mittels eines X-Y-Recorders nach dessen Drehwinkel oder über dessen Radius charakterisiert.

Die Reflexion (baseline reflectivity) der erfindungsgemäßen Probe beträgt, gemessen durch den Träger, 23 %, während die des Vergleichsbeispiels bei 25 % liegt.

Die Aufzeichnungsempfindlichkeit dagegen wird mit einer Laserdiode, deren Schreibleistung variierbar ist, gemessen. Verwendet wird eine Laserdiode von λ=813 nm; die Messung erfolgt im Schreibleistungsbereich von 2,2 bis 12 mW bei eingestellten 100 bis 250 ns Schreibimpulsen.

Die Fokussierung der Strahlung auf der Oberfläche der Farbstoffschicht (optimal sind 0,9 µm Durchmesser) sowie der gesamte Meßablauf sind computergesteuert: Nach Festlegung von 10 Leistungswerten im Bereich 2,2 bis 11,8 mW und einer bestimmten Belichtungszeit z.B. von 250 ns, wird vollautomatisch mittels eines Leseimpulses (einer Leistung von 0,5 mW für 100 ns) die Reflexion sowie die Transmission aufgezeichnet und gespeichert, danach ein Schreibimpuls abgegeben und wiederum Reflexion und Transmission gemessen. In dieser Weise scannt man in 0,5 µm-Schritten den Fokus für alle 10 Leistungsstufen ab.

Die jeweils optimal ermittelten Reflexionsunterschiede R vorher und R nachher (Rᵥₒᵣ und R_{nach}) werden als Quotient (Rᵥₒᵣ - R_{nach})/Rᵥₒᵣ x 100 (ΔR/R) über die Schreibpulsenergie (z.B. 0,55 bis 2,95 nJ) aufgetragen.

Durch die eingestrahlte Energie wird die Schicht an der Einstrahlungsstelle momentan erhitzt und je nach Schreibpulsenergie Löcher mit unterschiedlichen Reflexionswerten erhalten. Ein Maß für die Aufzeichnungsempfindlichkeit ist diejenige Schreibpulsenergie, bei der ein Kontrastverhältnis (ΔR/R) von z.B. 50 % erreicht wird.

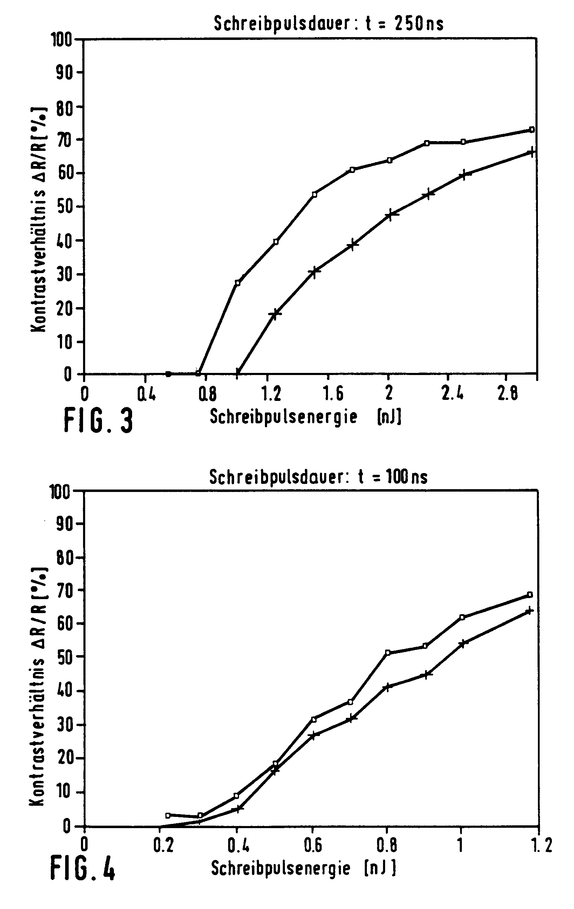

Aus Figur 4 geht hervor, daß bei Schreibpulsdauer t=100 ns und ΔR/R = 50 % die Aufzeichnungsempfindlichkeit des erfindungsgemäßen Aufzeichnungsmaterials (□) wesentlich höher ist als die der Vergleichsprobe (+), denn die erforderliche Schreibpulsenergie der erfindungsgemäßen Probe liegt mit 0,8 nJ wesentlich unter der Vergleichsprobe, die eine Energie von 0,97 nJ benötigt.

### Beispiel 2

Ein Träger aus Glas von 1,1 mm Dicke wird im Spin-Coating-Verfahren mit einer ca. 100 nm dicken Cellulosenitratschicht überzogen (Lösung analog zu Beispiel 1). Anschließend wird auf diese Bindemittelschicht eine Naphthalocyanin-Farbstoffschicht mit Me = VO²⁺ im Vakuum wie in Beispiel 1 aufgedampft. Die aufgedampfte Schicht beträgt 100 nm.

Zum Vergleich wird ein Polycarbonatträger, der nicht mit einer Bindemittelschicht versehen ist, in entsprechender Weise mit dem gleichen Farbstoff in gleicher Dicke beschichtet.

Während die mit einer Bindemittelschicht vorbeschichtete Probe 22 % Reflexion aufweist, zeigt die Vergleichsprobe eine Reflexion von 24 %.

Die Aufzeichnungsempfindlichkeiten beider Aufzeichnungsmaterialien sind aus Figur 3 zu erkennen. Das erfindungsgemäße mehrschichtige Aufzeichnungsmaterial (□) benötigt bei einer Schreibimpulsdauer von 250 ns und einem Kontrastverhältnis (ΔR/R) von 50 % lediglich eine Schreibenergie von 1,45 nJ, während die Vergleichsprobe ohne Bindemittelschicht (+) eine von 2,15 nJ erfordert.

### Beispiel 3

Polycarbonat-Träger einer Dicke von 1,2 mm werden im Spin-Coating-Verfahren mit 2 Gew.-%igen Lösungen verschiedener Bindemittel beschichtet, so daß Schichtgewichte von 80 bis 120 mg/m² erreicht werden. Als Bindemittel werden eingesetzt:
a) ein Polyamidharz (®Versalon 1112)
b) ein Polyvinylacetalharz (®Mowital B 60 HH)
c) ein Polystyrolharz (®PS 2)
d) ein Kohlenwasserstoffharz (®Resen 130/140).

Entsprechend Beispiel 2 werden die vorbeschichteten Polycarbonatträger mit Naphthalocyanin-Farbstoffen mit Me = VO²⁺ in einer Dicke von 100 nm homogen bedampft.

Die mehrschichtigen Aufzeichnungsmaterialien a), c) und d) zeigen Reflexionswerte von 20 %, während die Probe b) 27 % Reflexion aufweist.

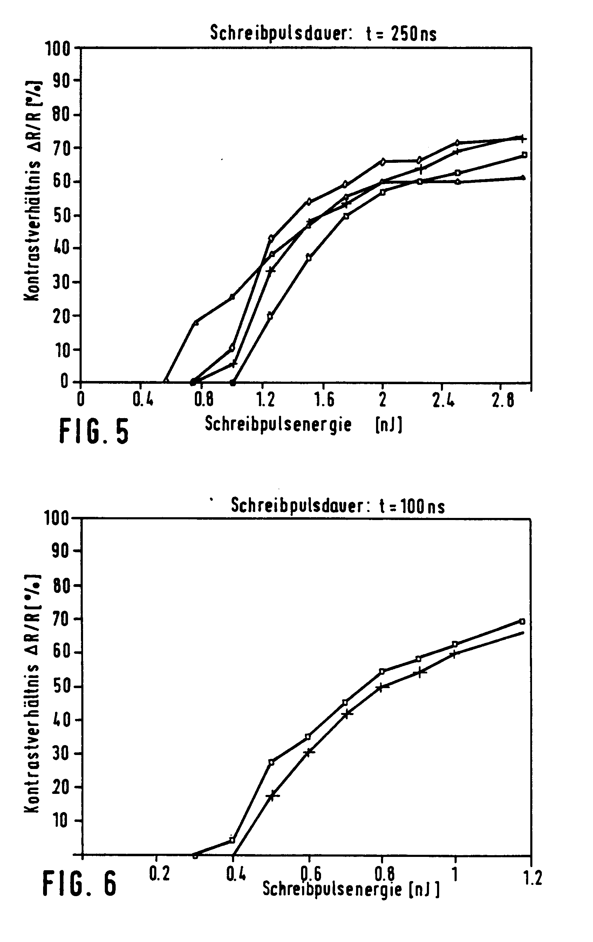

Figur 5 zeigt die Aufzeichnungsempfindlichkeiten bei einer Schreibpulsdauer von 250 ns. Die erforderliche Schreibenergie bei einem Kontrastverhältnis (ΔR/R) von 50 % beträgt für die Proben a) 1,75 nJ (□), b) (+) und d) jeweils 1,55 nJ (Δ) und c) 1,4 nJ (◇).

### Beispiel 4

Ein Polycarbonat-Träger einer Dicke von 1,2 mm wird im Spin-Coating-Verfahren mit einer Cellulosenitrat-Lösung beschichtet, so daß eine 80 nm dicke Schicht nach dem Trocknen entsteht.

Diese Schicht wird im Vakuum von 1,3 x 10⁻⁷ bis 10⁻⁸ bar homogen mit einem Naphthalocyanin-Farbstoff (Me = SnCl₂²⁺) bedampft. Die Dicke der aufgedampften Schicht beträgt ca. 90 nm.

Vergleichsweise wird ein Polycarbonat-Träger, der nicht mit einer Bindemittelschicht beschichtet ist, ebenso mit dem gleichen Naphthalocyanin-Farbstoff beschichtet.

Das erfindungsgemäße mehrschichtige Aufzeichnungsmaterial zeigt eine Reflexion von 22 %, während das nicht vorbehandelte Material eine Reflexion von 23 % aufweist.

Figur 6 zeigt die Aufzeichnungsempfindlichkeiten dieser Aufzeichnungsmaterialien bei einer Schreibpulsdauer von 100 ns. Die erforderlichen Schreibenergien bei einem Kontrastverhältnis (ΔR/R) von 50 % betragen für die erfindungsgemäße Probe (□) 0,74 nJ und für die Vergleichsprobe (+) 0,8 nJ.

### Beispiel 5

In diesem Beispiel wird die Temperaturstabilität der aufgedampften Farbstoffschicht bestimmt.

Zwei Polycarbonat-Träger, von denen einer mit einer Cellulosenitratlösung zu einer Schicht von 80 mg/m² beschichtet ist, werden homogen mit einem Naphthalocyanin-Farbstoff (Me = VO²⁺) bedampft. Die Dicke der Farbstoffschicht beträgt im Falle des vorbehandelten Trägers 150 nm und bei dem nicht vorbehandelten Träger 130 nm.

Beide Aufzeichnungsmaterialien werden 7 Tage bei 80° C gelagert. Nach Beendigung des Dauertestes wurden Transmission und Reflexion wie in Beispiel 1 bestimmt. Es zeigt sich, daß das nicht vorbeschichtete Material ebensowenig eine Abnahme der Transmission von 6 % und der Reflexion von 20 % aufweist, wie das erfindungsgemäße Aufzeichnungsmaterial, dessen Transmission von 4 % und Reflexion von 18 % konstant bleibt.

### Beispiel 6

Entsprechend Beispiel 2 wird eine 50 nm dicke Schicht aus einem Naphthalocyanin-Farbstoff (Me = VO²⁺) auf einen Polycarbonat-Träger aufgedampft. Darüber wird eine 100 nm dicke Cellulosenitratschicht aufgetragen und anschließend wiederum eine 50 nm dicke Schicht des gleichen Naphthalocyanin-Farbstoffs der ersten Schicht aufgedampft.

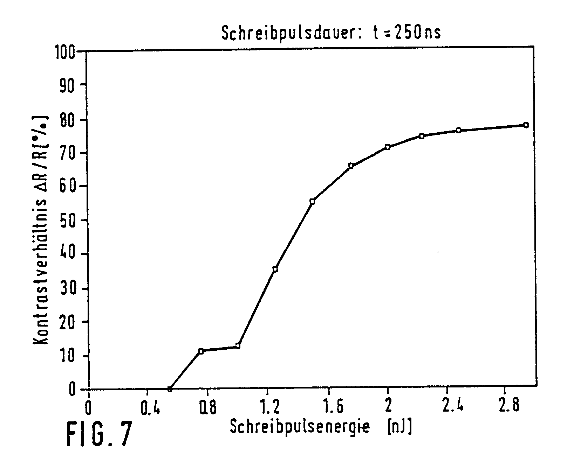

Die Reflexionsmessung durch den Träger erbrachte 17 %. Die Aufzeichnungsempfindlichkeit ist in Figur 7 dargestellt. Sie wurde bestimmt bei einer Schreibpulsdauer von 250 ns. Bei einem Kontrastverhältnis (ΔR/R) von 50 % ist die Schreibpulsenergie 1,42 nJ (□).

## Patentansprüche

1. Einmal beschreibbares mehrschichtiges Aufzeichnungsmaterial für optische Informationen, das einen Träger und eine 30 bis 200 nm dicke Schicht aus einem unsubstituierten Naphthalocyanin-Farbstoff der Formel I 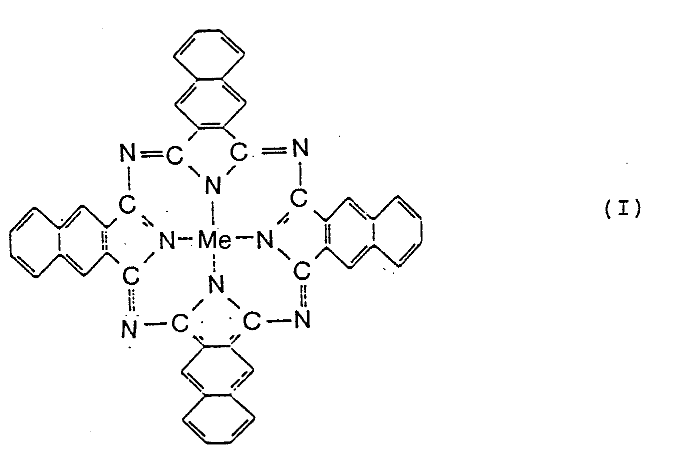 worin Me entweder zwei Wasserstoffatome oder ein Kation eines Metalls ausgewählt aus der Gruppe bestehend aus Cu, Zn, Al, Ga, In, Si, Ge, Sn, Pb, Mg, Ti, V, Cr, Mn, Fe, Co, Ni und Pd bedeutet,
umfaßt, dadurch gekennzeichnet, daß zwischen Träger und Schicht eine 30 bis 300 nm dicke, nichtporöse, durchgängige Bindemittelschicht aus einem thermoplastischen Material, das eine im Vergleich zum Farbstoff niedrige Erweichungstemperatur aufweist, angeordnet ist.

2. Aufzeichnungsmaterial gemäß Anspruch 1, dadurch gekennzeichnet, daß in der Verbindung der allgemeinen Formel I Me für VO²⁺, AlCl²⁺, SnCl₂²⁺, oder Zn²⁺ steht.

3. Aufzeichnungsmaterial gemäß Anspruch 1 oder 2, dadurch gekennzeichnet, daß die Farbstoffschicht eine Dicke von 60 bis 130 nm aufweist.

4. Aufzeichnungsmaterial gemäß einem oder mehreren der Ansprüche 1 bis 3, dadurch gekennzeichnet, daß die Bindemittelschicht eine Dicke von 50 bis 150 nm aufweist.

5. Aufzeichnungsmaterial gemäß einem oder mehreren der Ansprüche 1 bis 4, dadurch gekennzeichnet, daß zwischen dem Träger und der Bindemittelschicht eine weitere Schicht aus einem unsubstituierten Naphthalocyanin-Farbstoff der Formel I angeordnet ist.

6. Aufzeichnungsmaterial gemäß Anspruch 5, dadurch gekennzeichnet, daß die beiden Farbstoffschichten und die Bindemittelschicht jeweils eine Dicke von 40 bis 120 nm aufweisen.

7. Aufzeichungsmaterial gemäß einem oder mehreren der Ansprüche 1 bis 6, dadurch gekennzeichnet, daß es mit einem weiteren Aufzeichnungsmaterial, bestehend aus einem Träger und einer Naphthalocyanin-Farbstoffschicht, oder einem weiteren Aufzeichnungsmaterial gemäß einem oder mehreren der Ansprüche 1 bis 6 in der Weise verbunden ist, daß die Träger jeweils außen liegen.

8. Aufzeichnungsmaterial gemäß Anspruch 7, dadurch gekennzeichnet, daß die beiden Aufzeichnungsmaterialien durch eine Klebeschicht mit einer Dicke von mindestens 0,1 mm miteinander verbunden sind.

9. Aufzeichnungsmaterial gemäß einem oder mehreren der Ansprüche 1 bis 8, dadurch gekennzeichnet, daß der Träger aus Polycarbonat oder Poly(methylmethacrylat) besteht und mit Polyvinylalkohol vorbeschichtet ist.

## Claims

1. Multilayer recording medium for optical information, which can be used for a single recording operation and comprises a support and a 30 to 200 nm thick layer of an unsubstituted naphtholocyanine dye of the formula I 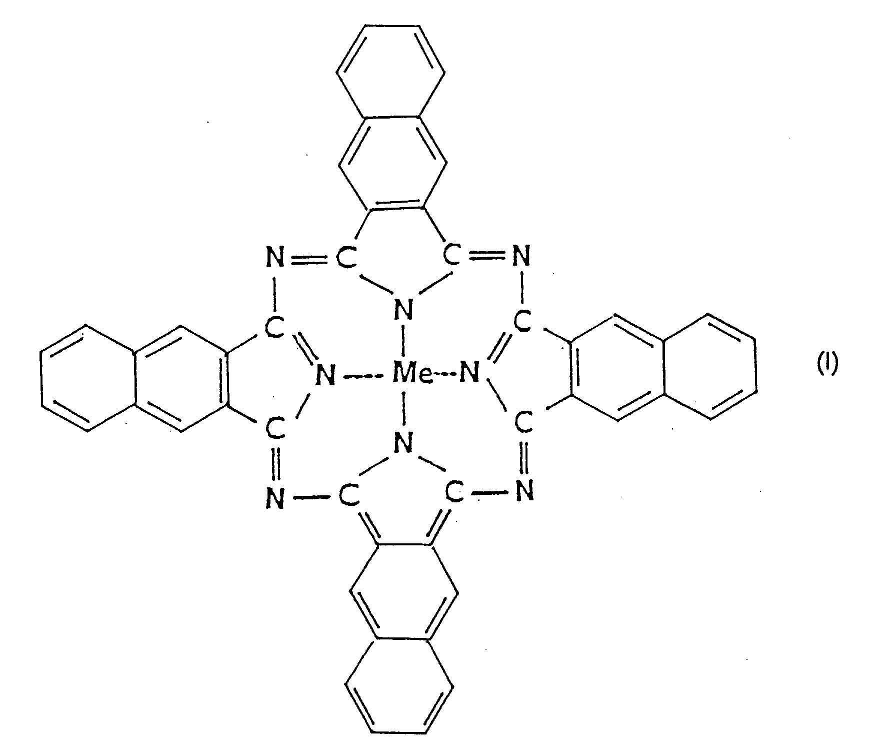 wherein
Me either denotes two hydrogen atoms or a cation of a metal selected from the group consisting of Cu, Zn, Al, Ga, In, Si, Ge, Sn, Pb, Mg, Ti, V, Cr, Mn, Fe, Co, Ni and Pd,
characterized in that a 30 to 300 nm thick non-porous, continuous binder layer of a thermoplastic material, which has a low softening temperature as compared with the dye, is disposed between the support and the layer.

2. A recording medium as claimed in claim 1, characterized in that, in the compound of the general formula I, Me represents VO²⁺, AlCl²⁺, SnCl₂²⁺ or Zn²⁺.

3. A recording medium as claimed in claim 1 or 2, characterized in that the dye layer has a thickness of 60 to 130 nm.

4. A recording medium as claimed in any one or more of claims 1 to 3, characterized in that the binder layer has a thickness of 50 to 150 nm.

5. A recording medium as claimed in any one or more of claims 1 to 4, characterized in that a further layer of an unsubstituted naphthalocyanine dye of the formula I is disposed between the support and the binder layer.

6. A recording medium as claimed in claim 5, characterized in that the two dye layers and the binder layer each have a thickness of 40 to 120 nm.

7. A recording medium as claimed in any one or more of claims 1 to 6, characterized in that it is bonded together with a further recording medium comprising a support and a layer of a naphthalocyanine dye or with a further recording medium as claimed in any one or more of claims 1 to 6, in such a way that the supports are in each case on the outside.

8. A recording medium as claimed in claim 7, characterized in that the two recording media are bonded together by means of an adhesive layer having a thickness of at least 0.1 mm.

9. A recording medium as claimed in any one or more of claims 1 to 8, characterized in that the support consists of a polycarbonate or poly(methylmethacrylate) and is precoated with a polyvinyl alcohol.

## Revendications

1. Milieu d'enregistrement multicouche pour informations optiques, qui peut être utilisé pour une opération d'enregistrement unique et comprend un support et une couche d'épaisseur comprise entre 30 et 200 nm, comprenant un colorant de type naphthalocyanine non-substitué de formule générale I : 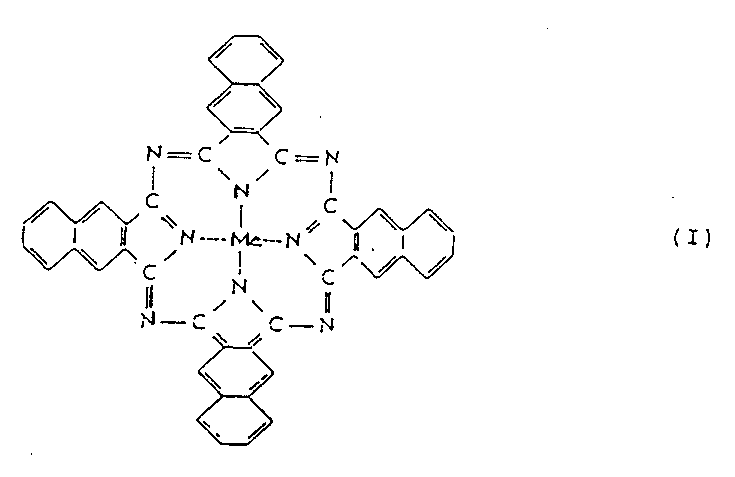 dans laquelle
Me représente soit deux atomes d'hydrogène, soit un cation d'un métal choisi parmi Cu, Zn, Al, Ga, In, Si, Ge, Sn, Pb, Mg, Ti, V, Cr, Mn, Fe, Co, Ni et Pd, caractérisé en ce qu'entre ce support et cette couche se situe une couche continue de liant, d'épaisseur comprise entre 30 et 300 nm, non poreuse, constituée d'une matière thermoplastique, qui présente une température de ramollissement plus faible que celle du colorant.

2. Milieu d'enregistrement selon la revendication 1, caractérisé en ce que dans le composé de formule générale I Me représente VO²⁺, AlCl²⁺, SnCl₂²⁺ ou Zn²⁺.

3. Milieu d'enregistrement selon la revendication 1 ou 2, caractérisé en ce que la couche de colorant présente une épaisseur comprise entre 60 et 130 nm.

4. Milieu d'enregistrement selon l'une ou plusieurs des revendications 1 à 3, caractérisé en ce que la couche de liant présente une épaisseur comprise entre 50 et 150 nm.

5. Milieu d'enregistrement selon l'une ou plusieurs des revendications 1 à 4, caractérisé en ce qu'une couche supplémentaire constituée d'un colorant du type naphtalocyanine non-substitué de formule générale I est située entre le support et la couche de liant.

6. Milieu d'enregistrement selon la revendication 5, caractérisé en ce que les deux couches de colorant et la couche de liant présentent chacune une épaisseur comprise entre 40 et 120 nm.

7. Milieu d'enregistrement selon l'une ou plusieurs des revendications 1 à 6, caractérisé en ce qu'il est assemblé avec un milieu d'enregistrement supplémentaire, constitué d'un support et d'une couche de colorant du type naphtalocyanine, ou avec un milieu d'enregistrement supplémentaire selon l'une ou plusieurs des revendications 1 à 6, de telle manière que les supports respectifs sont chacun situés à l'extérieur.

8. Milieu d'enregistrement selon la revendication 7, caractérisé en ce que les deux milieux d'enregistrement sont liés l'un à l'autre par une couche adhésive d'épaisseur d'au moins 0,1 mm.

9. Milieu d'enregistrement selon l'une ou plusieurs des revendications 1 à 8, caractérisé en ce que le support est constitué de polycarbonate ou de poly(méthylméthacrylate) et est revêtu au préalable avec un polyalcool de vinyle.
